# EUROPEAN PATENT SPECIFICATION

(11) **EP 3 897 119 B1**
(45) Date of publication and mention of the grant of the patent: **24.04.2024**
(21) Application number: 19845726.9
(22) Date of filing: 23.12.2019
(51) Int. Cl.: A01K 73/053

(54) **CONICAL ROLLER**
KEGELROLLE
ROULEAU CONIQUE

(30) Priority: 21.12.2018 IS 50249
(43) Date of publication of application: 27.10.2021
(73) Proprietor: Reval Seafood, 10138 Tallin (EE); Reyktal Bjonusta Ehf., 108 Reykjavik (IS)
(72) Inventor: VILHJALMSSON, Hjalmar, 112 Reykjavik (IS)
(74) Representative: Arnason Faktor
(86) International application number: PCT/IS2019/050018
(87) International publication number: WO 2020/129093

(56) References cited:
- FR-A- 614 708
- US-A- 3 250 035

## Description

### Field of the invention

The present invention relates to multi-trawl fishing systems, methods and devices for efficient bottom trawling. More specifically, the present invention provides control devices for connection to multi-trawl fishing devices to apply lateral forces onto towing wires and to force horizontal opening of trawls.

### Introduction

In order to make fishing more effective and more profitable a multitude of devices have been developed through the years. One way of fishing is trawling, where a fishing vessel drags a trawl behind the vessel. It is also known to connect two or more trawls together and thereby cover larger area during towing. As single trawl fishing, multiple trawl systems require trawl doors as well as other aids to help opening the "trawl mouth", i.e. forcing horizontal opening of trawl wings at the same time a horizontal opening is ensured, and to assist in spreading and controlling the depth of the trawls during towing.

US 1,803,928 discloses an apparatus for spreading the opening of a plurality of trawling nets using trawl doors with weights to spread the opening of a plurality of trawls connected to the same towing wire at various depth simultaneously. Another similar device is disclosed in US 4,783,927 providing an apparatus for spreading the opening of a plurality of trawling nets without using trawl doors using a plurality of spreading bars extending from a common connecting element which lies basically along the axis of the trawl. This apparatus is designed to trawl through waters where the trawls are fishing at various depth simultaneously.

NO307541 discloses an apparatus for enabling towing of several trawls arranged side by side and towed simultaneously along the seabed of an ocean and still maintain spreading of the trawls during towing. The disclosed has at least three trawls where the outer trawls are connected to trawl doors on the outer side, where the trawl doors used are bottom trawl doors. The inner side of the outer trawls and both sides of the middle trawl are connected with the connectable weight apparatus for lateral forcing of the towing warp wires and the opening of the trawl. The connectable weight apparatus has means for connection to the towing warp wire and for connecting to the trawls. The connectable weight apparatus consists of a weight portion at the bottom and a box shaped portion having steering plates for using the flow of water to force the connectable weight apparatus laterally away from the towing direction.

FR 614708 A discloses a conical roller device for using with ladle trawls. The device comprises a cone part that can rotate around an axis or axial members where axial ends extending from the cone member are joined with two semi-circular or arch-shaped pipes or rods to which ropes and/or cables can be fastened that extend to the ship and fishing net, respectively.

### Summary of the Invention

The present application provides novel roller clump devices according to claim 1 for use in trawling operation, where a plurality of trawls is connected and towed by a single vessel. A problem with multi-trawl fishing gear is that heavy clumps are needed to get the trawls as close to the seabed as possible and large trawl doors are needed to force opening of the trawls. All this increases the fuel consumption of the fishing vessels and/or leads to smaller trawls being applied. The roller clump devices of the present invention comprise a conical roller member which provides a lateral pulling force on the sweeps or bridles and therefore aids in opening of the trawls resulting in increased horizontal opening of trawls that leads to higher catch rates. The lateral pulling force of the conical rollers will further reflect in less force needed from the trawl doors for horizontal opening of the fishing gear and towing is possible with trawl doors of a smaller size and/or larger trawls can be applied. Accordingly, the conical roller clump device can be used to support increased catch rates of a vessel using multi-trawl fishing system by greater horizontal opening of the gear or to reduce fuel consumption of vessel by applying smaller trawl doors, or combination of both.

The conical roller clump device of the present invention is for use with more than two trawls. The device is made of a base member, having apertures or openings with connecting structures for providing a connection to the towing vessel, and a rotating conical member attached to the base member. The conical roller clump device has a function similar to traditional roller clumps in that it is a control device having connection to both the vessel and the trawls and provides a function in controlling the use of bottom trawls in a body of water. As the trawl doors are used to force lateral opening of the trawls, the roller clumps have the function of forcing the fishing gear as close to the seabed as possible and at the same time support the trawl doors in ensuring horizontal opening of the fishing gear. The roller clump devices of the present invention have a conical roller member for forcing lateral movement of the roller clump in addition to forcing more efficient opening of trawls. The conical roller clumps are used as a pair but for more than four trawls more conical rollers can always be used. When fishing with three trawls the device is placed on each side of the central trawl where the narrower portion of the conical roller is pointing towards the trawl doors and aiding in opening of the trawls. When four trawls are used a traditional clump (rolling or not) is added in the centre and two conical rollers at each side, again with the narrower portion pointing toward the trawl doors. When five trawls are used either four conical rollers can be used or two conical on the outside and two traditional in the centre in a row of five trawls. In case of trawling with six trawls four conical roller units may be used along with one traditional clump (rolling or not) etc.

The conical roller clump device of the present invention is used in pairs, where each roller clump device forces a lateral movement pulling the sweepers in a direction perpendicular or lateral to the towing direction, away from the path of sailing of the fishing vessel.

It is an object of the present invention to overcome and/or ameliorate the aforementioned drawbacks of the prior art and to provide an improved and/or alternative and/or additional system or device for facilitating horizontal opening of multi-trawl fishing gear. It is one preferred object of the present invention to provide a roller clump device comprising a conical roller member for promoting lateral movement of the roller clump device and thereby lateral opening of the trawl while also keeping the fishing gear at, or close to, the seabed. Moreover, it is a preferred object of the present invention to provide a system and method for multi-trawl fishing including three or more trawls, where conical roller clump devices are connected on each sided of the central trawl(s) having the smaller diameter part of the conical roller member facing away from the central trawl(s).

The object(s) underlying the present invention is (are) solved by the features defined in the independent claims. The dependent claims relate to preferred embodiments of the present invention. Further additional and/or alternative aspects are discussed below.

Thus, at least one of the objects of the present invention is solved by a roller clump device for multi-trawl fishing gear as defined by the claims. The roller clump device comprises a base member, where the base member further comprises i) connectors for connection of wires/cables to a towing vessel and connectors for connection of wires/cables to fishing gear, and ii) a lateral roller member rotationally attached to the base member. The lateral roller member is a conical shaped roller member for forcing lateral movement of the roller clump device in the direction of the narrow portion of the conical roller.

Another object of the present invention is solved by a multi-trawl fishing system as defined in claim 7 comprising i) a plurality of trawls, ii) control devices, including trawl doors and roller clump devices for providing weight and lateral movement on one or more of the trawls, iii) wires/cables for connection between a fishing vessel and the control devices, and iv) wires/cables for connecting the trawls to the control devices. The system further comprises conical roller clump devices according to claim 1 connected to the inner side of the mouth of each outer trawl and to the outer side of the mouth of the adjacent centre trawl(s) for forcing lateral movement of the centre trawl(s) from the towing direction.

One preferred object of the present invention is solved by a multi-trawl fishing system comprising i) a plurality of parallel arranged trawls. The trawls may include floats and/or sorting grid. ii) Towing wires/ropes/cables for connection between a fishing vessel and control devices such as, but not limited to; traditional clumps, roller clumps and trawl doors, iii) trawl doors, iv) traditional clump(s) and/or roller clump devices for providing weight and lateral movement on one or more of the trawls. v) Wires/ropes/cables for connecting the trawls to the trawl doors and control devices. The roller clump devices are connected to the inner side of the mouth of each outer trawl and to the outer side of the mouth of the adjacent centre trawl(s) for forcing lateral movement of the centre trawl(s) from the towing direction.

When casting a fishing device with a number of trawls, trawl doors, clumps and other devices providing weight and spreading of the trawl, such as the conical roller device of the present invention, the problem is that the hull structure of many trawlers does not have enough beam for use of multiple trawling gear. This causes problems during casting in that all doors and clump components of the fishing device are heavy and take up a lot of space and therefore have a tendency to get tangled and/or do not leave the vessel with enough horizontal clearance between, or some of them are not able to leave the vessel at the same time as others do. To use the available beam fully, and to be able to increase the number of trawls and therefore doors or clumps, the invention provides sideward movement of trawl wire blocks in a device, system and method to ensure parallel shooting/casting and hoisting/hauling of trawl doors and clumps in a mechanical or electrical driven sideward movement of the trawl blocks for wires during shooting and hoisting of fishing gear. This solution is provided in another preferred embodiment of the present invention, solved by a multi-trawl fishing system as defined in claim 11, comprising a multi-trawl fishing system, the multi-trawl fishing system comprises: i) a fishing vessel of a trawler design, said fishing vessel further comprising a trawl chute, for dumping/casting the trawl from the stern, ii) a plurality of trawls connected in a row having an outer trawl on each side and one or more centre trawls between said two outer trawls, iii) control devices, including trawl doors and clump devices of some sort for providing weight to keep the trawls at or close to the seabed, iv) first cables/wires for connection between a fishing vessel and the control devices, v) second cables/wires for connecting the trawls to the trawl doors and control devices. Furthermore, the multi-trawl fishing system further comprises clump devices according to the invention and connected to the inner side of the mouth of each outer trawl and to the outer side of the mouth of the adjacent centre trawl(s). Furthermore, the trawl chute further comprises guide bars for directing the clump devices in an outwardly direction during casting.

For the multi-trawl fishing system discussed above, the multi-trawl fishing system uses gallows, winches and holding and/or supporting structures at the stern of the trawling vessel for managing casting and hauling of the trawl. One novel structure according to the present invention is presented herein by implementing guide bars on the surface of the chute, but these guide bars are movable or adjustable to regulate the direction of the clump devices down the chute. The adjusting mechanism for the guide bars is preferably provided by hydraulic devices.

In the present invention, the connectors for connection of wires/cables to the towing vessel and the connectors for connection of wires/cables to fishing gear comprise openings or apertures in the base member.

In an embodiment of the present invention the roller clump device further comprises means for attaching extra weight to the roller clump device. In such an embodiment extra weights are added to the short side of the conical roller to obtain a weight symmetry in the conical roller, i.e. having the same weight to left and right from centre point.

In an embodiment of the present invention the number of trawls in the fishing gear system is three or more.

In an embodiment of the present invention a non-conical roller clump is placed between one or more of the centre trawls. This is an option when the number of trawls is four or more.

In an embodiment of the present invention the conical shaped roller member has gripping features, such as teeth or spikes or a ribbed surface to provide gripping properties on a seabed having little or no resistance such as a muddy seabed.

In an embodiment of the present invention the conical shaped roller member is made from discs with increasing diameter arranged on an axis. In such an embodiment, the use of "discs" like used in traditional rock-hopper gear, the conical roller device is designed by starting with a first disc with a broadest diameter, followed by second disc with a smaller diameter than the first disc, then a third with a smaller diameter than the second disc, etc. forming a conically shaped set of discs made from metal or other strong material. Such a conical roller is beneficial to settle into a muddy seabed leading to less swift horizontal movements and therefore give more stability of the gear during towing.

In an embodiment of the present invention the conical shaped roller member is has a roll tread or a screw thread surface.

In an embodiment of the present invention a non-conical roller clump is placed between the central trawls and the outer trawls. In such an embodiment, a traditional or conventional non-conical roller clump is placed in the centre of a row of trawls or on each side of a centre trawls when the number of trawls is an odd number.

In an embodiment of the present invention a pair of conical roller clump devices is arranged between the outer trawls to force a lateral movement of the trawls away from the towing direction.

In an embodiment of the present invention the multi-trawl fishing system comprises a fishing vessel of a trawler design with a trawl chute for casting the trawl, a plurality of trawls connected in a row, control devices, including trawl doors and clump devices for providing weight for on one or more of the trawls, as well as first cables/wires for connection between a fishing vessel and the control devices and second cables/wires for providing connection from the trawl doors and control devices to the trawls, where the gallows structure above the trawl chute further comprises guiding means for providing parallel casting and hauling of the trawls and control devices.

In an embodiment of the present invention the guiding means beams or slits, wherein blocks are attached, and wherein the blocks are movable along the guiding means.

In an embodiment of the present invention the guiding means provide a sideways movement of the blocks with respect to the chute of the fishing vessel.

In an embodiment of the present invention the system further comprises conical roller clump devices are connected to the inner side of the mouth of each outer trawl and to the outer side of the mouth of the adjacent centre trawl(s) for forcing lateral movement of the centre trawl(s) away from the towing direction.

In an embodiment of the present invention the multi-trawl fishing system further comprising gallows and winches for managing casting and hauling of the trawl.

In an embodiment of the present invention the guide bars are positioned on the surface of the chute and are movable or adjustable to regulate the direction of the roller clump devices down the chute.

In an embodiment of the present invention the guide bars are moved by hydraulic devices. In the present context the term "water" relates to clear water or sea water (the ocean) as most trawling takes place in the ocean/sea.

In the present context the term "connectors for connection of wires/cables to a towing vessel" refers to a structure attached to the control devices of the present invention, for connection to the vessel, for example a fishing boat. The connector comprises a plurality of apertures or holes in the base member of the roller clump device.

In the present context the term "wires/cables to a towing vessel" refers to the warp, the warp wire, towing warp wire. Such wires/cables can be selected from steel ropes, PE ropes or ropes and warps made of other material.

In the present context the term "connectors for connection of wires/cables to fishing gear" refers to a structure attached to the control devices of the present invention, for connection from the control devices to the vessel, for example a fishing boat. The connector comprises a plurality of apertures or holes in the base member of the roller clump device.

In the present context the term "wires/cables to fishing gear" refers to cables or ropes or wires such as straps, back straps, bridles or sweepers.

In the present context the term "gear" refers any gear towed by a vessel and controlled by trawl doors or roller clumps.

In the present context the term "inner side if the mouth" refers to the side of the trawl mouth closer to the centre line of the towing direction. This is to further define the position of a trawl and a mouth of a trawl amongst a plurality of adjacent trawls towed in a line behind a towing vessel where the centre trawl(s) are closest to the sailing route of the vessel and the outer trawls are furthest away from the sailing route of the vessel.

In the present context the term "outer side of the mouth" refers to the side of the trawl mouth further away from the centre line of the towing direction.

In the present context the term "outer trawl" refers to the trawls furthest away from the centre line of the towing direction on each side of a plurality of trawls being towed by a vessel.

In the present context the term "inner trawl(s)" refers to the trawl(s) between the outer trawls in a group of a plurality of trawls being towed by a vessel.

### Brief Description of the Figures

Fig. 1 illustrates the roller clump device of the present invention.
Fig. 2 shows the direction of towing and the operation of roller clump devices of the present invention.
Fig. 3 shows a vessel towing four trawls and the position of the roller clump devices between the trawls.
Fig. 4 shows the stern of a fishing vessel to outline the role of guiding means on the surface of the chute for casting and hauling trawls.

### Description of various embodiments

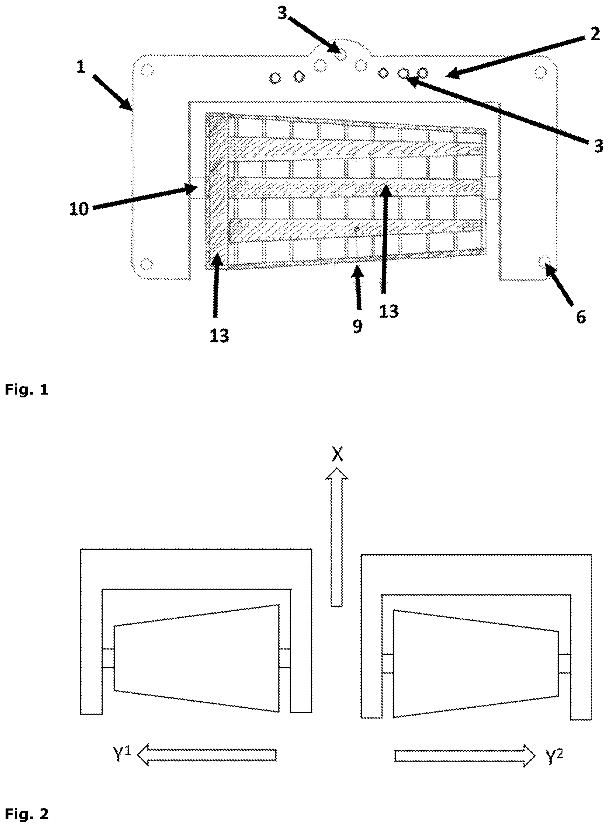

Figure 1 is a schematic drawing of one embodiment of a conical roller clump device according to the present invention. The roller clump device 1 shown in Fig. 1 has a base member 2 having openings or apertures 3 for attaching the roller clump device 1 through connecting cables/wires, to a towing vessel. The base member 2 further comprises connectors 6 for connection of wires/cables to the fishing gear. The different openings or apertures 3 are provided to alter the angle of towing on the clump device. The device has a lateral roller member 9 rotationally attached to the base member 2 by an axis 10. The lateral roller member 9 is designed as a conical shaped roller member which forces a lateral movement of the roller clump device 1 lateral to the direction of the trawling direction. The conical roller member 9 shown in the embodiment of Fig. 1 has a ribbed surface for better grip on a muddy seabed. The filled surfaces 13 are made of Hardox^{®} steel for increasing the strength of the device.

Figure 2 shows a pair of roller clump devices and their orientation during towing. Each roller clump has the narrower portion directed away from the towing direction (X). The direction of operation of each roller clump device is shown as directions (Y¹ and Y²) being outwardly and sideways to the direction of towing (X), although the direction of operation of the roller clump devices are not exactly perpendicular, but more a lateral force on the fishing gear away from the path of the vessel (towing direction).

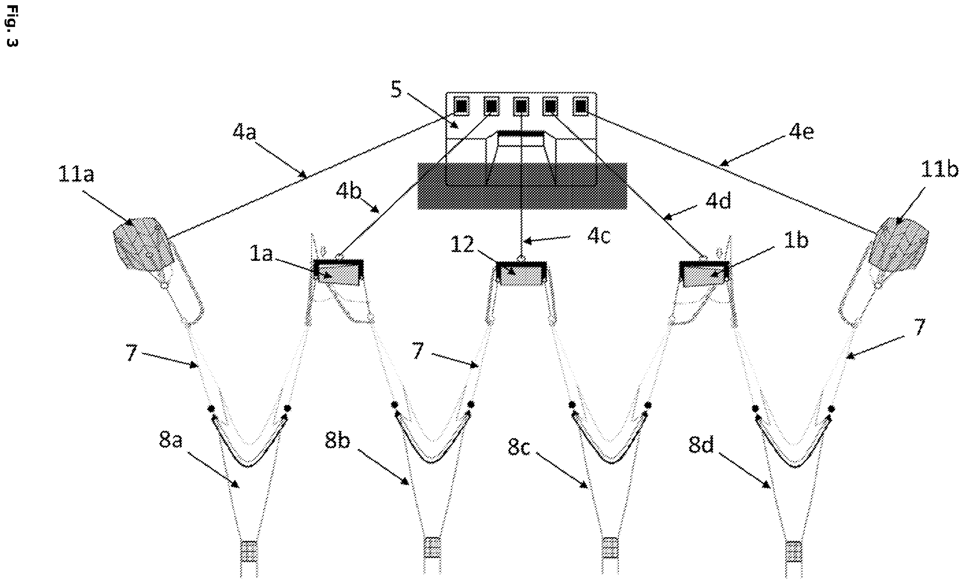

Figure 3 shows a setup of a vessel 1 towing four trawls 8a-d. The figure shows a portion of the aft of the vessel 5 with five towing warp wires 4a-e. Two towing warp wires 4 are connected to a trawl door 11a-b, the middle towing warp wire 4c is connected to a traditional roller clump 12 and between the trawl door connecting towing warp wire and the middle towing warp wire on each side are towing warp wires 4b and 4d connected to a pair of conical roller clumps 1a-b. Extending from the trawl doors, the traditional roller clump 12 and the conical roller clumps 1a-b of the present invention are back straps or sweepers connecting said trawl doors, the traditional roller clump 12 and the conical roller clumps 1a-b the four trawls 8a-d being towed by the vessel. Going from left to right towing warp wire 4a is connected to trawl door 11a, which is then connected to the right most trawl 8a in drawing. Towing warp wire 4b is connected to a conical roller clump 1a where the narrower portion of the conical roller is pointing towards trawl door 11a to apply pulling force outwardly and sideways to the towing direction. The second cables/wires 7 provide connection from the trawl doors and control devices to the trawls.

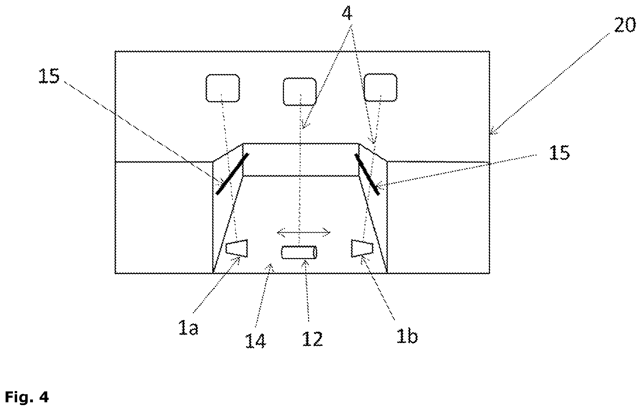

From conical roller clump 1a, the right-hand side connection 7 extends to the right side of trawl 8a and to the left side of the second trawl 8b. The third towing warp wire 4c is connected to a traditional roller clump which is connected to the left side of trawl 8b and to the right side of trawl 8c. Towing warp wire 4d is connected to the second conical roller clump 1b, which is connected to the left side of trawl 8c and to the right side of trawl 8d. The last towing warp wire on the far right is connected to trawl door 11b and the right-hand connection 7 from the trawl door 11b is then attached to the right side of trawl 8d. Figure 4 is a schematic drawing of a stern of a trawling vessel outlining the function and position trawl blocks along guiding means above the surface of the chute (attached to the gallows-structure for casting and hauling trawls. The trawl chute 14 for dumping/casting the trawl from the stern is shown, where the control devices, i.e a roller clump device 12 and the conical roller clump devices 1a/1b are shown in casting position as the slide down the chute 14. The first cables/wires 4 for connection between a fishing vessel and the control devices are shown with broken lines, but the second cables/wires 7 for connection from the trawl doors and control devices to the trawls are not shown. The guide bars 15 for directing the conical roller clump devices 1 in an outwardly direction during casting are shown on the surface of trawl chute 14 and the arrows indicate lateral/diagonal movement of the adjustable guide bars for directing the roller clump device 12 and the conical roller clump devices 1a/1b down the chute during casting.

As used herein, including in the claims, singular forms of terms are to be construed as also including the plural form, unless the context indicates otherwise. Thus, it should be noted that as used herein, the singular forms "a," "an," and "the" include plural references unless the context clearly dictates otherwise.

Throughout the description and claims, the terms "comprise", "including", "having", and "contain" and their variations should be understood as meaning "including but not limited to", and are not intended to exclude other components.

The present invention also covers the exact terms, features, values and ranges etc. in case these terms, features, values and ranges etc. are used in conjunction with terms such as about, around, generally, substantially, essentially, at least etc. (i.e., "about 3" shall also cover exactly 3 or "substantially constant" shall also cover exactly constant).

The term "at least one" should be understood as meaning "one or more", and therefore includes both embodiments that include one or multiple components. Furthermore, dependent claims that refer to independent claims that describe features with "at least one" have the same meaning, both when the feature is referred to as "the" and "the at least one".

It will be appreciated that variations to the foregoing embodiments of the invention can be made while still falling within the scope of the invention, which is defined by the appended claims. Features disclosed in the specification, unless stated otherwise, can be replaced by alternative features serving the same, equivalent or similar purpose. Thus, unless stated otherwise, each feature disclosed represents one example of a generic series of equivalent or similar features.

Use of exemplary language, such as "for instance", "such as", "for example" and the like, is merely intended to better illustrate the invention and does not indicate a limitation on the scope of the invention unless so claimed. Any steps described in the specification may be performed in any order or simultaneously, unless the context clearly indicates otherwise.

All of the features and/or steps disclosed in the specification can be combined in any combination, except for combinations where at least some of the features and/or steps are mutually exclusive. In particular, preferred features of the invention are applicable to all aspects of the invention and may be used in any combination.

## Claims

1. A roller clump device (1) for multi-trawl fishing gear, said roller clump device comprising:
- a base member (2), said base member (2) further comprising connectors (3) for connection of wires/cables (4) to a towing vessel (5) and connectors (6) for connection of wires/cables (7) to fishing gear (8),
- a lateral roller member (9) rotationally attached to the base member (2) by an axis (10),
wherein the lateral roller member (9) is a conical shaped roller member for forcing lateral movement of the roller clump device 1 in the direction of the narrow portion of the conical roller
**characterized in that**
the connectors (3) for connection of wires/cables (4) to the towing vessel (5) and the connectors (6) for connection of wires/cables (7) to fishing gear (8) comprise openings or apertures in the base member, and
**in that** the different openings or apertures are provided to alter the angle of towing on the clump device.

2. The roller clump device (1) according to claim 1, wherein the base member (2) further comprises means for attaching extra weight to the roller clump device.

3. The roller clump device (1) according to claim 1, wherein the conical shaped roller member has gripping features on the surface, such as teeth or spikes or a ribbed surface.

4. The roller clump device (1) according to claim 1, wherein the conical shaped roller member has a roll tread.

5. The roller clump device (1) according to claim 1, wherein the conical shaped roller member has a screw thread surface.

6. The roller clump device (1) according to claim 1, wherein the conical shaped roller member is made from discs with increasing diameter arranged on an axis.

7. A multi-trawl fishing system, said system comprising:
- a plurality of trawls (8) connected in a row having an outer trawl on each side and one or more centre trawls between said two outer trawls,
- control devices, including trawl doors (11) and roller clump devices for providing weight and lateral movement on one or more of the trawls,
- first cables/wires (4) for connection between a fishing vessel and the control devices,
- second cables/wires (7) for connecting the trawls to the trawl doors and control devices,
**characterized in that** the system further comprises conical roller clump devices (1) according to claim 1, connected to the inner side of the mouth of each outer trawl and to the outer side of the mouth of the adjacent centre trawl(s) for forcing lateral movement of the centre trawl(s) away from the towing direction.

8. The multi-trawl fishing system according to claim 7, wherein the number of trawls (8) is three or more.

9. The multi-trawl fishing system according to claim 7, wherein the number of trawls (8) is four or more and wherein a non-conical roller clump (12) is placed between one or more of the centre trawls.

10. The multi-trawl fishing system according to claim 7, wherein a pair of conical roller clump devices (1) is arranged between the outer trawls to force a lateral movement of the trawls away from the towing direction.

11. The multi-trawl fishing system according to claim 7, said system comprising a fishing vessel (5) of a trawler design, wherein said fishing vessel comprises a trawl chute (14), for dumping/casting the trawl from the stern and gallows above the trawl chute (14) for supporting blocks managing casting and hauling of trawls, said gallows comprise guiding means (15) for providing parallel casting and hauling of the trawls and control devices.

12. The multi-trawl fishing system according to claim 11, wherein the guiding means (15) are beams or slits, wherein blocks are attached, and wherein the blocks are movable along the guiding means (15).

13. The multi-trawl fishing system according to claim 11, wherein the guiding means (15) provide a sideways movement of the blocks with respect to the chute (14) of the fishing vessel.

14. A method for bottom trawling comprising connecting three or more trawls in a row having an outer trawl on each side and one or more centre trawls between said outer trawls, control devices, including trawl doors and roller clump devices for providing weight and lateral movement on one or more of the trawls, first cables/wires (4) for connection between a fishing vessel and the control devices, second cables/wires (7) for connecting the trawls to the trawl doors and control devices,
**characterized in that** conical roller clump devices according to claim 1 are connected to the inner side of the mouth of each outer trawl and to the outer side of the mouth of the adjacent centre trawl(s), having the smaller diameter part of the conical roller member facing away from the central trawl(s), for forcing lateral movement of the centre trawl(s) away from the towing direction.

15. The method according to claim 14, wherein the number of trawls is four or more and wherein a non-conical roller clump (12) is placed between centre trawls.

## Patentansprüche

1. Walzengewichtvorrichtung (1) für Multischleppnetz-Fischfanggeräte, wobei die Walzengewichtvorrichtung umfasst:
- ein Basiselement (2), wobei das Basiselement (2) ferner Verbinder (3) zur Verbindung von Drähten/Kabeln (4) mit einem Schleppschiff (5) und Verbinder (6) zur Verbindung von Drähten/Kabeln (7) mit Fischfanggeräten (8) umfasst,
- ein laterales Walzenelement (9), das durch eine Achse (10) drehbar an dem Basiselement (2) befestigt ist, wobei es sich bei dem lateralen Walzenelement (9) um ein konisch geformtes Walzenelement handelt, um eine laterale Bewegung der Walzengewichtvorrichtung 1 in Richtung des schmalen Abschnitts der konischen Walze zu erzwingen,
**dadurch gekennzeichnet, dass**
die Verbinder (3) zur Verbindung von Drähten/Kabeln (4) mit dem Schleppschiff (5) und die Verbinder (6) zur Verbindung von Drähten/Kabeln (7) mit Fischfanggeräten (8) Öffnungen oder Durchgänge in dem Basiselement umfassen und
**dass** die verschiedenen Öffnungen oder Durchgänge bereitgestellt sind, um den Schleppwinkel an der Gewichtvorrichtung zu verändern.

2. Walzengewichtvorrichtung (1) nach Anspruch 1, wobei das Basiselement (2) ferner Mittel zum Anbringen von zusätzlichem Gewicht an der Walzengewichtvorrichtung umfasst.

3. Walzengewichtvorrichtung (1) nach Anspruch 1, wobei das konisch geformte Walzenelement Greifmerkmale auf der Oberfläche aufweist, wie z.B. Zähne oder Stacheln oder eine gerippte Oberfläche.

4. Walzengewichtvorrichtung (1) nach Anspruch 1, wobei das konisch geformte Walzenelement eine Walzenlauffläche aufweist.

5. Walzengewichtvorrichtung (1) nach Anspruch 1, wobei das konisch geformte Walzenelement eine Gewindefläche aufweist.

6. Walzengewichtvorrichtung (1) nach Anspruch 1, wobei das konisch geformte Walzenelement aus Scheiben mit zunehmendem Durchmesser hergestellt ist, die auf einer Achse angeordnet sind.

7. Multischleppnetz-Fischfangsystem, wobei das System umfasst:
- eine Vielzahl von Schleppnetzen (8), die in einer Reihe verbunden sind, mit einem äußeren Schleppnetz auf jeder Seite und einem oder mehreren mittleren Schleppnetzen zwischen den beiden äußeren Schleppnetzen,
- Steuervorrichtungen, einschließlich Scherbrettern (11) und Walzengewichtvorrichtungen zum Bereitstellen von Gewicht und lateraler Bewegung an einem oder mehreren der Schleppnetze,
- erste Kabel/Drähte (4) zur Verbindung zwischen einem Fischfangschiff und den Steuervorrichtungen,
- zweite Kabel/Drähte (7) zur Verbindung der Schleppnetze mit den Scherbrettern und Steuervorrichtungen,
**dadurch gekennzeichnet, dass** das System ferner konische Walzengewichtvorrichtungen (1) nach Anspruch 1 umfasst, die mit der Innenseite der Öffnung jedes äußeren Schleppnetzes und mit der Außenseite der Öffnung des oder der benachbarten mittleren Schleppnetze verbunden sind, um eine laterale Bewegung des oder der mittleren Schleppnetze weg von der Schlepprichtung zu erzwingen.

8. Multischleppnetz-Fischfangsystem nach Anspruch 7, wobei die Anzahl der Schleppnetze (8) drei oder mehr beträgt.

9. Multischleppnetz-Fischfangsystem nach Anspruch 7, wobei die Anzahl der Schleppnetze (8) vier oder mehr beträgt und wobei ein nicht-konisches Walzengewicht (12) zwischen einem oder mehreren der mittleren Schleppnetze platziert ist.

10. Multischleppnetz-Fischfangsystem nach Anspruch 7, wobei ein Paar konischer Walzengewichtvorrichtungen (1) zwischen den äußeren Schleppnetzen angeordnet ist, um eine laterale Bewegung der Schleppnetze weg von der Schlepprichtung zu erzwingen.

11. Multischleppnetz-Fischfangsystem nach Anspruch 7, wobei das System ein Fischfangschiff (5) in Trawler-Bauweise umfasst, wobei das Fischfangschiff eine Schleppnetzrutsche (14) zum Abwerfen/Auswerfen des Schleppnetzes vom Heck und Galgen oberhalb der Schleppnetzrutsche (14) zum Tragen von Blöcken umfasst, die das Auswerfen und Einholen von Schleppnetzen steuern, wobei die Galgen Führungsmittel (15) zum Ermöglichen eines parallelen Auswerfens und Einholens der Schleppnetze und Steuervorrichtungen umfassen.

12. Multischleppnetz-Fischfangsystem nach Anspruch 11, wobei es sich bei den Führungsmitteln (15) um Balken oder Schlitze handelt, an denen Blöcke angebracht sind, und wobei die Blöcke entlang der Führungsmittel (15) beweglich sind.

13. Multischleppnetz-Fischfangsystem nach Anspruch 11, wobei die Führungsmittel (15) eine laterale Bewegung der Blöcke in Bezug auf die Rutsche (14) des Fischfangschiffs ermöglichen.

14. Verfahren zum Grundschleppnetzfischen, umfassend Verbinden von drei oder mehr Schleppnetzen in einer Reihe mit einem äußeren Schleppnetz auf jeder Seite und einem oder mehreren mittleren Schleppnetzen zwischen den äußeren Schleppnetzen, Steuervorrichtungen, einschließlich Scherbrettern und Walzengewichtvorrichtungen zum Bereitstellen von Gewicht und lateraler Bewegung an einem oder mehreren der Schleppnetze, ersten Kabeln/Drähten (4) zur Verbindung zwischen einem Fischfangschiff und den Steuervorrichtungen, zweiten Kabeln/Drähten (7) zum Verbinden der Schleppnetze mit den Scherbrettern und Steuervorrichtungen,
**dadurch gekennzeichnet, dass** konische Walzengewichtvorrichtungen nach Anspruch 1 mit der Innenseite der Öffnung jedes äußeren Schleppnetzes und mit der Außenseite der Öffnung des oder der benachbarten mittleren Schleppnetze verbunden werden, wobei der Teil des konischen Walzenelements mit dem kleineren Durchmesser von dem oder den mittleren Schleppnetzen wegweist, um eine laterale Bewegung des oder der mittleren Schleppnetze weg von der Schlepprichtung zu erzwingen.

15. Verfahren nach Anspruch 14, wobei die Anzahl der Schleppnetze vier oder mehr beträgt und zwischen mittleren Schleppnetzen ein nicht-konisches Walzengewicht (12) platziert wird.

## Revendications

1. Dispositif de lestage à rouleau (1) pour équipements de pêche à chaluts multiples, ledit dispositif de lestage à rouleau comprenant :
- un élément base (2), ledit élément base (2) comprenant en outre des points d'attache (3) pour l'attache de fils/câbles (4) à un bateau remorqueur (5) et des points d'attache (6) pour l'attache de fils/câbles (7) à des équipements de pêche (8),
- un élément rouleau latéral (9) attaché en rotation à l'élément base (2) par un axe (10),
dans lequel l'élément rouleau latéral (9) est un élément rouleau de forme conique pour forcer le mouvement latéral du dispositif de lestage à rouleau (1) dans la direction de la portion étroite du rouleau conique,
**caractérisé en ce que**
les points d'attache (3) pour l'attache de fils/câbles (4) au bateau remorqueur (5) et les points d'attache (6) pour l'attache de fils/câbles (7) aux équipements de pêche (8) comprennent des orifices ou ouvertures dans l'élément base, et
**en ce que** les différents orifices ou ouvertures sont prévus pour modifier l'angle de remorquage sur le dispositif de lestage.

2. Dispositif de lestage à rouleau (1) selon la revendication 1, dans lequel l'élément base (2) comprend en outre des moyens pour attacher un poids supplémentaire au dispositif de lestage à rouleau.

3. Dispositif de lestage à rouleau (1) selon la revendication 1, dans lequel l'élément rouleau de forme conique a des organes de prise sur la surface, telles que des dents ou des pointes ou une surface nervurée.

4. Dispositif de lestage à rouleau (1) selon la revendication 1, dans lequel l'élément rouleau de forme conique a une bande de roulement.

5. Dispositif de lestage à rouleau (1) selon la revendication 1, dans lequel l'élément rouleau de forme conique a une surface à filet de vis.

6. Dispositif de lestage à rouleau (1) selon la revendication 1, dans lequel l'élément rouleau de forme conique est fait de disques avec un diamètre croissant agencés sur un axe.

7. Système de pêche à chaluts multiples, ledit système comprenant :
- une pluralité de chaluts (8) attachés en une rangée, ayant un chalut extérieur de chaque côté et un ou plusieurs chaluts centraux entre lesdits deux chaluts extérieurs,
- des dispositifs de commande, incluant des panneaux de chalut (11) et des dispositifs de lestage à rouleau pour fournir un poids et un mouvement latéral sur un ou plusieurs des chaluts,
- des premiers câbles/fils (4) pour l'attache entre un bateau de pêche et les dispositifs de commande,
- des seconds câbles/fils (7) pour l'attache des chaluts aux panneaux de chalut et dispositifs de commande,
**caractérisé en ce que** le système comprend en outre des dispositifs de lestage à rouleau conique (1) selon la revendication 1, attachés au côté intérieur de la gueule de chaque chalut extérieur et au côté extérieur de la gueule du (des) chalut(s) central (centraux) adjacent(s) pour forcer le mouvement latéral du (des) chalut(s) central (centraux) à l'opposé de la direction de remorquage.

8. Système de pêche à chaluts multiples selon la revendication 7, dans lequel le nombre de chaluts (8) est de trois ou plus.

9. Système de pêche à chaluts multiples selon la revendication 7, dans lequel le nombre de chaluts (8) est de quatre ou plus et dans lequel un lestage à rouleau non conique (12) est placé entre un ou plusieurs des chaluts centraux.

10. Système de pêche à chaluts multiples selon la revendication 7, dans lequel une paire de dispositifs de lestage à rouleau conique (1) est agencé entre les chaluts extérieurs pour forcer un mouvement latéral des chaluts à l'opposé de la direction de remorquage.

11. Système de pêche à chaluts multiples selon la revendication 7, ledit système comprenant un bateau de pêche (5) d'une conception de chalutier, dans lequel ledit bateau de pêche comprend une rampe de chalut (14), pour lâcher/lancer le chalut depuis l'arrière et des potences au-dessus de la rampe de chalut (14) pour supporter des blocs gérant le lancer et la remontée de chaluts, lesdites potences comprennent des moyens de guidage (15) pour fournir un lancer et une remontée parallèles des chaluts et dispositifs de commande.

12. Système de pêche à chaluts multiples selon la revendication 11, dans lequel les moyens de guidage (15) sont des barres ou des fentes, dans lequel des blocs sont fixés, et dans lequel les blocs sont mobiles le long des moyens de guidage (15).

13. Système de pêche à chaluts multiples selon la revendication 11, dans lequel les moyens de guidage (15) fournissent un mouvement latéral des blocs par rapport à la rampe (14) du bateau de pêche.

14. Procédé pour chalutage sur le fond, comprenant l'attache de trois, ou plus, chaluts en une rangée, ayant un chalut extérieur de chaque côté et un ou plusieurs chaluts centraux entre lesdits chaluts extérieurs, des dispositifs de commande, incluant des panneaux de chalut et des dispositifs de lestage à rouleau pour fournir un poids et un mouvement latéral sur un ou plusieurs des chaluts, des premiers câbles/fils (4) pour l'attache entre un bateau de pêche et les dispositifs de commande, des seconds câbles/fils (7) pour l'attache des chaluts aux panneaux de chalut et dispositifs de commande,
**caractérisé en ce que** des dispositifs de lestage à rouleau conique selon la revendication 1 sont attachés au côté intérieur de la gueule de chaque chalut extérieur et au côté extérieur de la gueule du (des) chalut (s) central (centraux) adjacent(s), la partie diamétrale plus petite de l'élément rouleau conique faisant face à l'opposé du (des) chalut(s) central (centraux), pour forcer le mouvement latéral du (des) chalut(s) central (centraux) à l'opposé de la direction de remorquage.

15. Procédé selon la revendication 14, dans lequel le nombre de chaluts est de quatre ou plus et dans lequel un lestage à rouleau non conique (12) est placé entre des chaluts centraux.
